# EUROPEAN PATENT APPLICATION

(11) **EP 1 477 814 A1**
(43) Date of publication of application: **17.11.2004**
(21) Application number: 03252956.2
(22) Date of filing: 13.05.2003
(51) Int. Cl.: G01N 35/10, B01L 3/02

(54) **Fluid dispenser**

(71) Applicant: The Automation Partnership (Cambridge) Limited, Royston, Hertfordshire SG8 5WY (GB)
(72) Inventor: Bargh, Adrian Neil, London N8 7LS (GB)
(74) Representative: Brunner, Michael John

(57) **Abstract**

A dispenser is provided comprising one or more dispensing tips (11) through which fluid is ejected in use, a support plate (15) in sliding contact with each of the dispensing tips (11), and a flexible tube (12) for connecting, in use, each dispensing tip (11) to a supply of pressurised fluid such that when, in use, the end of the dispensing tip (11) comes into contact with a substrate (13) there is sliding motion between the plate (15) and the dispensing tip against the bias of the flexible tube (12).

## Description

The present invention relates to dispensers for dispensing low volumes of fluids and, more particularly, to an automated dispensing system designed to dispense multiple low volumes into wells on a micro-titre plate.

When very low volumes of fluid (in the order of 50nl) are to be dispensed from a dispensing tip or needle it is a common problem that the liquid to be dispensed forms only a small drop on the end of the pipette needle. The mass of the drop is not sufficient to allow gravity to overcome the surface tension forces that keep the drop from falling from the end of the tip.

In the past this problem has been tackled in one of two different ways. The first of these is described in European Patent Application No. 02251774.2. This document discloses a dispensing assembly wherein the fluid is ejected by applying a dispensing force as a single sudden impulse. This results in the droplet moving rapidly from the tip to overcome the surface tension forces.

The second method used to address this problem is to bring the dispensing tip very close to or into contact with the substrate onto which the droplet is to be dispensed in order to allow the droplet to adhere to the surface. This is known in the art as "touch off" and the smaller the volume to be dispensed, the more accurate the "touch off" has to be. Typically, the end of the pipette tip makes contact with the substrate ensuring that the liquid ejected from the tip is transferred to the substrate. However, in such cases, because the volumes to be dispensed are very small the tolerance on the position of the plate relative to the dispensing tip is limited. If the plate is slightly misaligned or the surface onto which the plate rests is either warped or not quite level then some of the dispensing tips may not come into contact with the plate at all and therefore the fluid will not contact the plate and will remain on the tips. For those positions on the plate where the distance between the tip and the plate is less than it should be then the tip of the dispensing needle will impact the plate and scratch or even puncture the plate base. In applications where optical assessment of the sample is required this can have a significant impact on the quality of the readings obtained.

It is known to use metal tips that may deform slightly if a sufficiently high force is supplied. However, under these circumstances, the force required to cause the tip itself to bend is far higher than the force required to damage the plate or a PTFE coating on the tip.

It is therefore an aim of the present invention to overcome some of the problems associated with uneven plate positioning and damage to the plate or tips by excessive contact forces between the tips and the plate.

According to the present invention there is provided a dispenser comprising:
a support in sliding contact with one or more dispensing elements, each element having:
   a dispensing tip at one end through which fluid is ejected in use, and
   a curved flexible tube portion for connecting each dispensing tip to a supply of fluid such that when, in use, the dispensing tip comes into contact with a substrate there is sliding motion between the support and the dispensing element against the bias of the curved flexible tube portion.

Preferably, the supply of fluid is supplied by a syringe.

Preferably, the dispensing tip is a hollow needle of constant cross section.

Preferably, each dispensing tip has a shoulder portion that engages with the support plate to limit the motion of the dispensing tip towards the plate.

The dispensing tip and the curved flexible tube portion may or may not be integrally formed.

An example of the present invention will now be further described with reference to the accompanying drawings in which:
Figure 1 is an array of dispensing elements common in the field.
Figure 2 is a dispensing element of a dispenser according to the present invention.
Figure 3 is an array of dispensing elements according to the present invention.

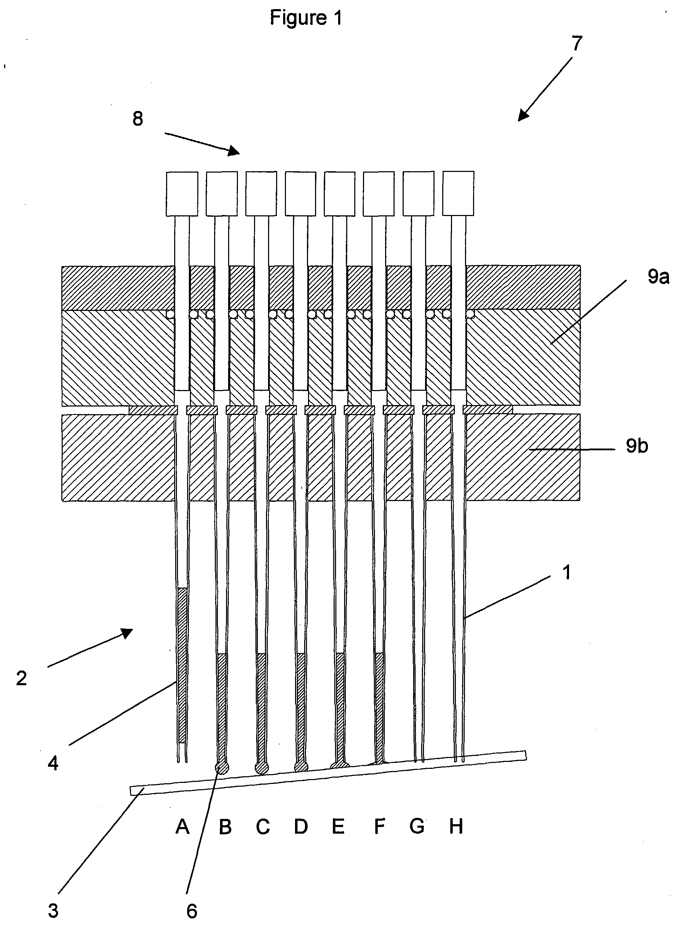

Figure 1 shows the problems associated with the prior art. A plurality of dispensing tips 1 are shown forming part of an array 2. This array 2 forms the lower part of a standard dispensing apparatus 7 known in the art. This apparatus 7 typically comprises an array of syringes 8 that are actuated by the relative movement between two plates 9a, 9b. The dispensing tips 1 are shown with a slight taper but they may alternatively have constant cross section throughout. Below the dispensing tips 1 is a plate 3 onto which the fluid 4 contained in the dispensing tips 1 is to be dispensed. The angle at which the plate 3 is illustrated is an exaggeration for the purposes of clearer explanation. The plate 3 has a plurality of wells 5 into which fluid 4 is dispensed.

Dispensing tips D, E and F are the only tips within this array 2 that will dispense effectively as a result of the proximity of the end of the tip 1 to the bottom of the respective well 5. This allows a droplet of fluid 4 to be effectively dispensed. Tips A, B and C will not dispense fluid 4 at all. The fluid 4 will travel along the tip 1 and will form a droplet 6 of fluid 4 as shown on tip B. At the other end of the array 2 the tips G and H crash into the bottom of the wells 5 in the plate 3. This will scratch the plate 3 and may result in the piercing the bottom of the well 5.

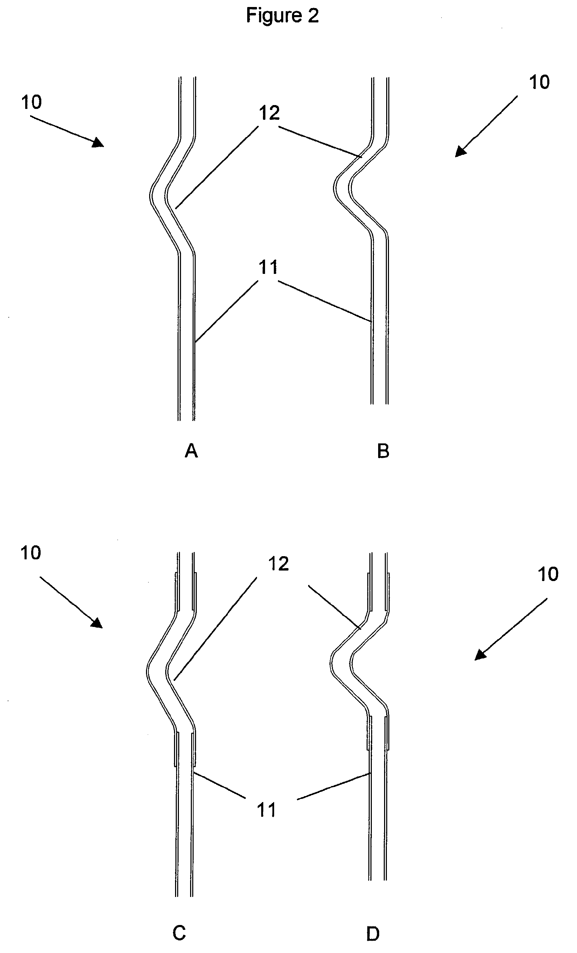

Figures 2a and 2b show a dispensing element 10 consisting of a single length of material that is formed into a dispensing tip 11 at one end and, at the other end, the element 10 is formed into a curved shape. This shaping of the element 10 results in a section 12 that has increased elasticity allowing it to deform in response to a relatively low force. The element 10 is made from steel.

Figures 2c and 2d show a dispensing element 10 consisting of a dispensing tip 11 and a section of flexible tubing 12 connecting the dispensing tip 11 to a dispenser 20. The flexible tubing 12 is PTFE tubing that has good flexibility in a bending mode. This results in the tubing 12 flexing at a relatively low force and therefore reduces the damage to the plate. The PTFE flexes in a bending mode as shown in Figure 2c and d. Figure 2c shows the tubing at rest with no force applied. Figure 2d shows the tubing 12 when it has been compressed. The PTFE bends rather then compacting and therefore maintains a substantially constant volume within the tubing 12. This is very important in applications where the volume of fluid dispensed is critical.

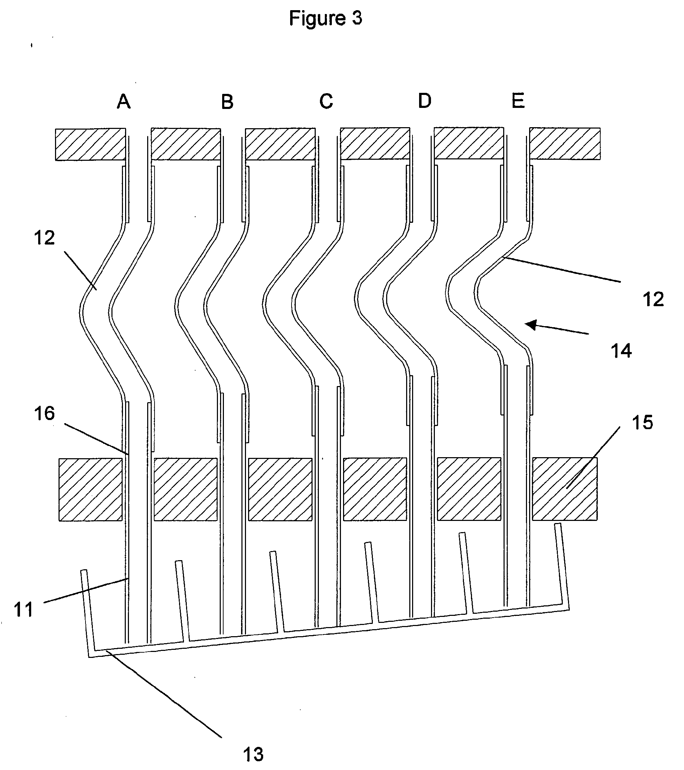

Figure 3 shows a dispenser 20 according to the present invention. The dispenser 20 has plurality of elements 10 incorporated into an array 14. Each of the dispensing tips 11 passes through a support plate 15 which defines the horizontal position of the tip 11. A shoulder portion 16 is provided on each of the dispensing tips 11 such that when the dispenser 20 is not in use or when the alignment of plate 13 is ideal there is no additional flexing of the tubing 12 and the shoulder portion 16 is in contact with the support plate 15. The end of the flexible tubing that is not connected to the dispensing tip 11 is attached to a syringe 19 in the example of the invention shown in Figure 3. If the plate is misaligned, as shown in Figure 3, as the dispensing tips 11 come into contact with the bottom of the wells 17 in the plate 13 the flexible tubing 12 bends and allows the dispensing tip 11 to slide through the support plate 15. The flexible tubing 12 shown in Figure 3 is deformed into a simple curve, however, it may form part of a helix or spiral or extend laterally so that the tip 11 is not vertically below the top of the flexible tubing 12. The flexible tubing is made from PTFE which bends as a result of a relatively low force and therefore the dispensing tip 11 will move through the support plate 15 rather than damaging the plate 13. The PTFE also has the advantage that it causes the tube to bend in accordance with Figure 3 rather than shrinking in a concertina form. This ensures that the volume of the fluid passageway from the fluid supply 19 through tips 11 to the plate 13 remains constant regardless of the extent to which the plate 13 is misaligned and therefore the accuracy of the volume to be dispensed is not compromised.

## Claims

1. A dispenser comprising:
a support in sliding contact with one or more dispensing elements, each element having:
a dispensing tip at one end through which fluid is ejected in use, and
a curved flexible tube portion for connecting each dispensing tip to a supply of fluid such that when, in use, the dispensing tip comes into contact with a substrate there is sliding motion between the support and the dispensing element against the bias of the curved flexible tube portion.

2. A dispenser according to claim 1, wherein the supply of fluid is supplied by a syringe.

3. A dispenser according to claim 1 or claim 2, wherein the dispensing tip is a hollow needle of constant cross section.

4. A dispenser according to any of the preceding claims, wherein each dispensing tip has a shoulder portion that engages with the support plate to limit the motion of the dispensing tip towards the plate.

5. A dispenser according to any of the preceding claims, wherein the dispensing tip and the curved flexible tube portion are integrally formed.

6. A dispenser according to any of claims 1 to 4, where in the dispensing tip and the curved flexible tube portion are not integrally formed.
